# EUROPEAN PATENT SPECIFICATION

(11) **EP 4 454 856 B1**
(45) Date of publication and mention of the grant of the patent: **17.09.2025**
(21) Application number: 23204689.6
(22) Date of filing: 19.10.2023
(51) Int. Cl.: B29C 48/25, B29C 48/285, B29B 7/60

(54) **FEED HOPPER WITH MIXER FOR SCREW EXTRUDER**
AUFGABETRICHTER MIT MISCHER FÜR SCHNECKENEXTRUDER
TRÉMIE D'ALIMENTATION AVEC MÉLANGEUR POUR EXTRUDEUSE À VIS

(30) Priority: 27.04.2023 PL 44465423
(43) Date of publication of application: 30.10.2024
(73) Proprietor: Politechnika Rzeszowska im. Ignacego Lukasiewicza, 35-959 Rzeszów (PL)
(72) Inventor: Bak, Lukasz, Rzeszow (PL); Fracz, Wieslaw, Rzeszow (PL); Janowski, Grzegorz, Rzeszow (PL)
(74) Representative: JWP Patent & Trademark Attorneys

(56) References cited:
- CN-U- 202 080 612
- CN-U- 205 671 447
- CN-U- 208 082 325
- JP-A- H06 286 884
- PL-B1- 241 447

## Description

The subject-matter of the invention is a feed hopper with a mixer, for a screw extruder, used in particular for plastics, where the material being fed is a material in the form of a powder, in particular powdered biodegradable materials and powdered biodegradable materials with a filler of natural origin.

Powdered biodegradable materials such as PHBV (poly(3-hydroxybutyric acid-co-3-hydroxyvaleric acid)) tend to "bridge" in the feed container during the extrusion process. This phenomenon is about masses of material blocking each other in the feed container, as a result of which they do not fall gravitationally towards the screw. "Bridging" of the material causes the material is taken in irregularly by the screw or is completely absent in the plasticising assembly, which results in process instability, various output speeds of the extrudate and degradation of the material. The effect of "bridging" increases with the presence of natural fillers (in particular fibrous fillers).

Chinese description of the invention CN 108357072 A discloses a feed hopper of a twin-screw extruder, the hopper comprising a cover to which a first motor is connected, whose shaft is connected to a first blender, which is located inside the feed hopper in its axis. In the lower part of the feed hopper, at its outlet and in the pipe leading to the vertical screw feeder, there are two second blenders, each of which is connected to the motor shaft of one of the two second motors.

Further examples of feed hoppers are known from CN 205 671 447 U, JP H06 286884 A, CN 208082325 U, CN 202080 612 U and PL 241447 B1.

There are no feed hoppers for extruders known in the prior art which would comprise a mixer adapted to biodegradable materials with plant fillers, especially fibrous fillers, and which would be characterised by a simple structure and at the same time prevent the occurrence of irregular intake of material by the screw in the plasticising assembly, which results in process instability and various output speeds of the extrudate.

A feed hopper with a mixer, for a screw extruder, the feed hopper comprising a conical feed container, in the axis of which there is a mixer comprising a shaft connected to an electric motor, with horizontally-arranged mixing arms disposed on the shaft and with the feed container being closed with a lid comprising a feed opening, according to the invention is characterised in that the mixing arms have a triangular cross-section and have a rake surface inclined with respect to the horizontal plane by an angle from the range of from 10° to 30°, and further, the shaft of the mixer is terminated from below with a brush whose bristles are directed downwards and are arranged in the outlet port of the feed container, wherein the bristle ends of the brush protrude from this outlet port.

Preferably, the lower surface of each of the mixing arms is inclined with respect to the horizontal by at most 3°.

Further benefits are obtained if the brush is in the form of a horizontal arm, which in the centre is connected to the shaft, and the bristles are connected to the lower surface of this arm and is made of plastic.

In the solution, thanks to the inclined rake surface of the mixing arms, the weight of the material inside the feed hopper is lifted upwards, preventing it from "bridging". Parallel to the horizontal, the lower surface of the arms prevents the extruded material from being kneaded in the feed container. The brush makes it possible to ensure that the outlet port is unobstructed. The solution makes it possible to eliminate the problem related to the material not being taken in or being taken in irregularly by the screw, and thus ensures process stability, a constant output speed of the extrudate, and consequently improves the quality of materials in which fibrous organic fillers are used.

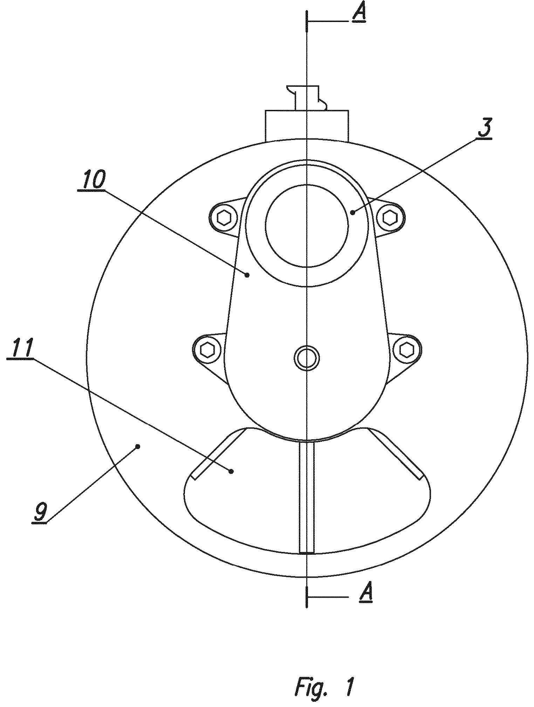

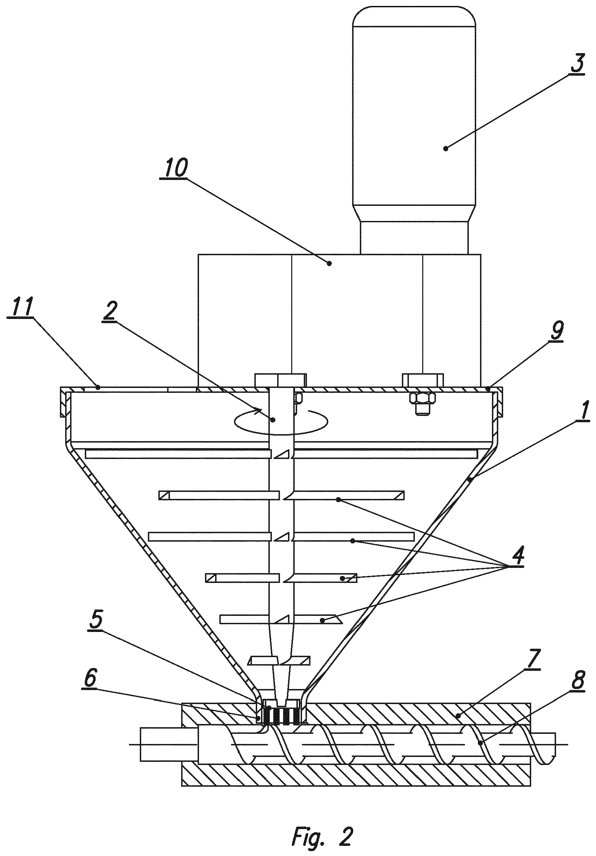

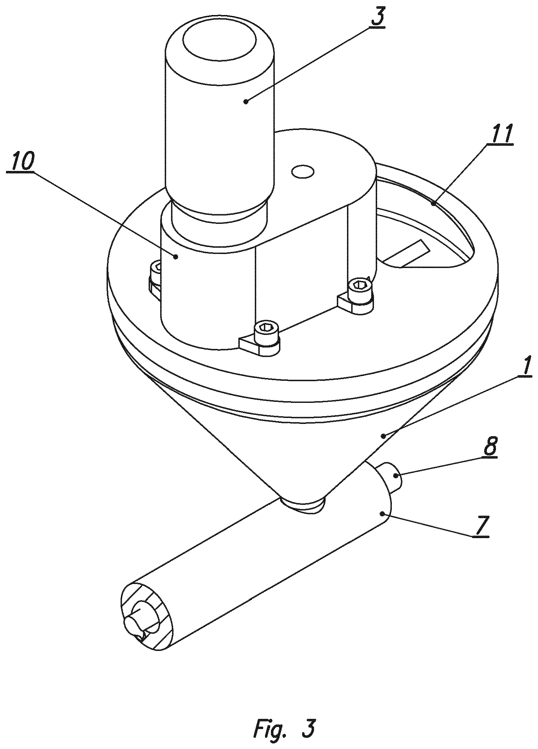

The feed hopper with the mixer, for the screw extruder, is explained in more detail in the embodiments shown in the drawing, in which Fig. 1 shows the feed hopper in a top view; Fig. 2 - in cross section, along line A-A shown in Fig. 1, through the feed container; Fig. 3 - in isometric projection.

The feed hopper with a mixer, for a screw extruder, in the first embodiment comprises a conical feed container 1, in the axis of which there is a mixer comprising a shaft 2 which is connected to an electric motor 3. Horizontal mixing arms 4 are disposed on the shaft 2, inside the feed container 1, each of which has a triangular cross-section, and furthermore, the rake surface of each of them is inclined with respect to the horizontal by an angle of 10°, and the lower surface of each of the mixing arms 4 is parallel with respect to the horizontal plane. The shaft 2 is terminated with a brush 5 that has a horizontal arm with which plastic bristles are connected from below, wherein the brush arm 5 is in its centre connected to the tip of the shaft 2. The brush 5 is arranged in the outlet port 6 of the feed container 1 and its bristles extend from the outlet port 6, such that when the feed hopper is mounted on the feed port of the screw extruder 7, the bristles of the brush 5 extend to the working surface of the screw 8 of the extruder 7. The feed container 1 is closed from above with a lid 9 to which an electric motor 3 is connected, with the mixer shaft 2 being connected to this motor via a reducer 10. The rotational speed of the mixer is from 5 to 20 rpm, wherein the rotations of the mixer are adjusted by means of an inverter. The lid 9 comprises a feed opening 11.

The feed hopper with a mixer, for a screw extruder, in the second embodiment, comprises mixing arms 4 whose rake surface is inclined with respect to the horizontal by an angle of 30° and the lower surface of each of the mixing arms 4 is inclined with respect to the horizontal by 3°. In other respects, the invention is made as in the first embodiment.

### List of reference symbols

- 1: - feed container
- 2: - shaft
- 3: - electric motor
- 4: - mixing arm
- 5: - brush
- 6: - outlet port
- 7: - extruder
- 8: - screw
- 9: - cover
- 10: - reducer
- 11: - feed opening

## Claims

1. A feed hopper with a mixer, for a screw extruder, the feed hopper comprising a conical feed container, in the axis of which there is a mixer comprising a shaft connected to an electric motor, with horizontally-arranged mixing arms disposed on the shaft and with the feed container being closed with a lid comprising a feed opening, **characterised in that** the mixing arms (4) have a triangular cross-section and have a rake surface inclined with respect to the horizontal plane by an angle from the range of from 10° to 30°, and further, the shaft (2) of the mixer is terminated from below with a brush (5) whose bristles are directed downwards and are arranged in the outlet port (6) of the feed container (1), wherein the bristle ends of the brush (5) protrude from this outlet port (6).

2. The feed hopper according to claim 1, **characterised in that** the lower surface of each of the mixing arms (4) is inclined with respect to the horizontal by at most 3°.

3. The feed hopper according to claim 1 or 2, **characterised in that** the brush (5) is in the form of a horizontal arm, which in the centre is connected to the shaft (2), and the bristles are connected to the lower surface of this arm and are made of plastic.

## Patentansprüche

1. Ein Einzugstrichter mit einem Mischer, für einen Schneckenextruder, wobei der Einzugstrichter einen konischen Einzugsbehälter umfasst, in dessen Achse ein Mischer vorhanden ist, der eine mit einem Elektromotor verbundene Welle umfasst, wobei auf der Welle horizontal ausgerichtete Mischarme angeordnet sind und der Einzugsbehälter mit einem eine Einzugsöffnung umfassenden Deckel verschlossen ist, **dadurch gekennzeichnet, dass** die Mischarme (4) einen dreieckigen Querschnitt aufweisen und eine in Bezug auf die horizontale Ebene um einen Winkel aus dem Bereich von 10° bis 30° geneigte Spanfläche aufweisen, und ferner die Welle (2) des Mischers von unten mit einer Bürste (5) abgeschlossen ist, deren Borsten nach unten gerichtet sind und in der Auslassanschluss (6) des Einzugsbehälters (1) angeordnet sind, wobei die Borstenenden der Bürste (5) aus dieser Auslassanschluss (6) herausragen.

2. Der Einzugstrichter nach Anspruch 1, **dadurch gekennzeichnet, dass** die untere Fläche jedes der Mischarme (4) in Bezug auf die Horizontale um höchstens 3° geneigt ist.

3. Der Einzugstrichter nach Anspruch 1 oder 2, **dadurch gekennzeichnet, dass** die Bürste (5) in Form eines horizontalen Arms ist, der in der Mitte mit der Welle (2) verbunden ist, und die Borsten mit der unteren Oberfläche dieses Arms verbunden sind und aus Kunststoff bestehen.

## Revendications

1. Trémie d'alimentation avec un mélangeur, pour une extrudeuse à vis, un trémie d'alimentation comprenant une boîte d'alimentation de cône, à l'axe duquel se trouve un mélangeur comprenant un arbre relié au moteur électrique, avec des bras mélangeurs agencés horizontalement disposés sur l'arbre et avec la boîte d'alimentation étant fermée au moyen d'un couvercle comprenant un orifice de remplissage, **caractérisé en ce que** des bras mélangeurs (4) présente une section transversale triangulaire et présente une surface de herse inclinée par rapport au plan horizontal à angle dans une plage de 10° à 30°, et en outre, l'arbre (2) du mélangeur se termine par le bas avec une brosse (5) dont des soies sont orientées vers le bas et sont agencés dans l'orifice de sortie (6) de boîte d'alimentation (1), des extrémités des soies de brosse (5) font saillie depuis ledit orifice de sortie (6).

2. Trémie d'alimentation selon la revendication 1, **caractérisé en ce que** la surface inférieure de chacun des bras mélangeurs (4) est inclinée par rapport à l'horizontal à angle de 3° au maximum.

3. Trémie d'alimentation selon la revendication 1 ou 2, **caractérisé en ce que** la brosse (5) est en forme d'un bras horizontal qui au centre est relié à l'arbre (2), et des soies sont reliés à la surface inférieure de ledit bras et sont en matière plastique.
